# EUROPEAN PATENT APPLICATION

(11) **EP 0 652 542 A1**
(43) Date of publication of application: **10.05.1995**
(21) Application number: 94203274.9
(22) Date of filing: 10.11.1994
(51) Int. Cl.: G08B 25/10, B60R 25/10, H04M 11/04

(54) **A security system for valuable movable equipment**

(30) Priority: 10.11.1993 NL 9301947
(71) Applicant: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(57) **Abstract**

A security system for valuable movable equipment, comprising one or more stations to be alerted which are provided with a telephone apparatus, and a number of mobile security devices to be arranged in the objects to be protected, which mobile security devices comprise a mobile telephone apparatus, control means for the mobile telephone apparatus, a theft sensor, a receiver for position information and memory means for storing information to be transferred by way of the mobile telephone apparatus, wherein the memory means comprise a speech memory which is coupled with the mobile telephone apparatus and further a speech generator is provided which is capable of converting at least the position information into speech signals which can be stored in the speech memory.

## Description

This invention relates to a system for protecting valuable mobile equipment, such as for instance ships, airplanes, automobiles, movable generators, trailer trucks, motor coaches, and the like. An important object of the invention is to provide a system which enables this valuable equipment to be tracked again after theft has occurred.

Because the objects to be protected are transportable and because mobility is very high nowadays and transportation can be fast, the working range of the system should be as large as possible and preferably cover the entire world.

In order to obtain a largest possible working range, use can advantageously be made of a Global Positioning System (GPS), which enables positioning throughout the world. Other positioning systems, such as for instance Loran-C or Decca could also be used. Of course, it would also be possible to install a separate infrastructure to realize the locating function. A GPS system gives a location based on signals coming from a number of satellites which have been launched into so-called geostationary orbits around the earth. In order to obtain, in case of theft, a report at any definable position, the system according to the invention preferably makes use of the Global System Mobile (GSM), which will make mobile telephone traffic possible in the future, likewise throughout the world.

In this connection, of course, alternatives are possible too, such as for instance the now present car phone networks or the cellular telephone systems, such as for instance Kermitt.

Positioning systems as well as mobile telephone systems are already known.

Further, EP-A-0 242 099 discloses a vehicle protection system in which participant vehicles comprise a receiver for signals transmitted by the satellites belonging to a GPS system. The receiver is coupled with a microprocessor which can compute the position of the vehicle on the basis of the received signals. Upon unauthorized displacement of the vehicle, the microprocessor can contact a central station by way of a cellular telephone system and pass on the actual position. The microprocessor can be coupled with a number of additional sensors which can activate the microprocessor, for instance if a window of the vehicle is broken, the hood is opened by an unauthorized person, or the like. A similar system is known from WO-A-93/16452.

In the known systems where use is made of digital information regarding position and identification of the object, it is necessary that one or more special (central) stations be present which are capable of interpreting the coded information of, for instance, the GPS system at all times. Furthermore, telephone systems of the type such as the new GSM telephone system have problems transmitting digital information by way of modems because through switching several calls can take place simultaneously over one line.

The object of the invention is to obviate the drawbacks outlined and generally to provide an effective and reliably operating worldwide applicable security system for valuable movable equipment. To that end, according to the invention, a system for protecting valuable movable equipment, comprising one or more stations to be alerted which are provided with a telephone apparatus, and a number of mobile security devices to be arranged in the objects to be protected, which mobile security devices comprise a mobile telephone apparatus, control means for the mobile telephone apparatus, a theft sensor, a receiver for position information and memory means for storing information to be transferred by way of the mobile telephone apparatus, is characterized in that the memory means comprise a speech memory which is coupled with the mobile telephone apparatus and further a speech generator is provided which is capable of converting at least the position information into speech signals which can be stored in the speech memory.

To apply the system according to the invention, it is no longer necessary to dispose of one or more special central stations which can process digital information and convert it into information which is intelligible to the human senses. Because the transmitted information consists of speech signals, the information can be transmitted by way of any type of telephone link to any desired telephone apparatus without any problems. The received information is directly intelligible to the telephone subscriber and need not be processed further. In principle, therefore, the system according to the invention can make use entirely of already existing communications infrastructure. Special measures need to be taken only on the objects to be protected.

The system according to the invention provides not only the possibility of reporting theft together with identification number and position, but also the possibility of transmitting other information, for instance information regarding the operation of a generator or other process information or status information. It is also possible to call the system at all times to inquire the position and the other information referred to.

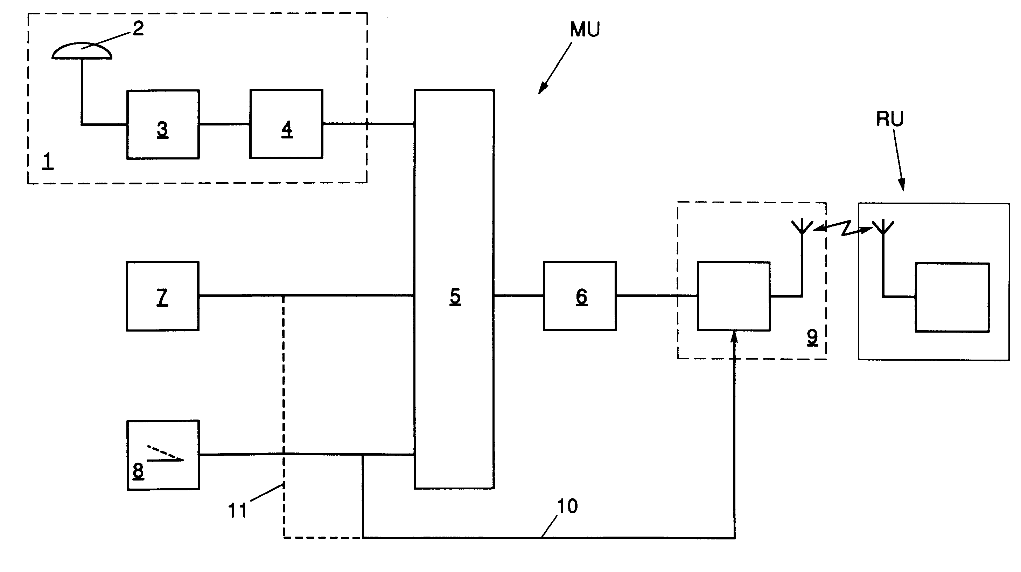

Hereinafter the invention will be further described with reference to the accompanying single drawing. The drawing shows a block diagram of an example of a system according to the invention.

The system shown comprises a mobile security device MU with a positioning module 1, for instance a GPS module. This module comprises an antenna 2, a receiver 3 and a data processor 4. Position information received by the antenna is passed on at regular intervals by way of the receiver and the processor in digital form to a speech generator 5, which converts this information and orders it in a speech memory 6. Any other information, for instance process information coming, for instance, from sensors 7 is converted by the speech generator 5 into spoken information and likewise stored in the speech memory 6.

A theft sensor 8, which may for instance consist of a switch which is activated if the protected object is hoisted or is otherwise manipulated without authorization, provides that, for instance as indicated by a line 10, a mobile (GSM) telephone apparatus 9 chooses one of a number of preprogrammed telephone numbers of stations RU to be alerted, whereafter the information from the speech memory is transmitted in audible and intelligible language. The programmed telephone numbers can be any telephone numbers, for instance of the police, management staff, service engineers, etc., without necessitating special provisions. Of course, an emergency center can be called as well. The message will contain the last position and the information coming from the sensors. To this can be added the identification number of the object, optionally expanded with instructions as to how to respond to an alert.

Of course, another sensor can initiate a message as well, as indicated by a broken line 11, if, for instance, a predetermined value is exceeded.

If the mobile telephone number of the object is called, also the message concerning the position and the sensor parameters is transmitted in spoken language from the speech memory.

By virtue of the compact construction of the different modules of the system, it is possible to hide the device in the object without the device being visible from outside. Supply of the device is possible for a prolonged time by means of batteries.

## Claims

1. A security system for valuable movable equipment, comprising one or more stations to be alerted which are provided with a telephone apparatus, and a number of mobile security devices to be arranged in the objects to be protected, which mobile security devices comprise a mobile telephone apparatus, control means for the mobile telephone apparatus, a theft sensor, a receiver for position information and memory means for storing information to be transferred by way of the mobile telephone apparatus, characterized in that the memory means comprise a speech memory which is coupled with the mobile telephone apparatus and further a speech generator is provided which is capable of converting at least the position information into speech signals which can be stored in the speech memory.

2. A security system according to claim 1, characterized by one or more further sensors which are capable of detecting a predetermined condition in or of the protected object and which are connected with the speech generator.

3. A security system according to claim 1 or 2, characterized in that the control means for the mobile telephone apparatus of the group consisting of the theft sensor and the further sensors comprise at least the theft sensor.

4. A security system according to any one of the preceding claims, characterized in that the mobile telephone apparatus is designed to be wirelessly activated to pass on a message located in the speech memory.
